# EUROPÄISCHE PATENTSCHRIFT

(11) **EP 3 330 107 B1**
(45) Veröffentlichungstag und Bekanntmachung des Hinweises auf die Patenterteilung: **31.07.2019**
(21) Anmeldenummer: 17193610.7
(22) Anmeldetag: 28.09.2017
(51) Int. Cl.: B60C 15/02, B60C 15/028

(54) **DICHTRING FÜR EIN FAHRZEUGRAD**
SEALING RING FOR A VEHICLE WHEEL
BAGUE D'ÉTANCHÉITÉ POUR UNE ROUE DE VÉHICULE

(30) Priorität: 25.11.2016 DE 102016223393
(43) Veröffentlichungstag der Anmeldung: 06.06.2018
(73) Patentinhaber: Continental Reifen Deutschland GmbH, 30165 Hannover (DE)
(72) Erfinder: Müller, Matthias-Stephan, 30827 Garbsen (DE); Weinhold, Hartmut, 38122 Braunschweig (DE)
(74) Vertreter: Finger, Karsten

(56) Entgegenhaltungen:
- EP-A1- 1 720 718
- WO-A1-2012/114964
- JP-A- H06 143 910
- US-A- 5 495 881

## Beschreibung

Die Erfindung betrifft einen Dichtring für ein Fahrzeugrad mit einem schlauchlosen Luftreifen mit zwei an dessen radial innerer Seite ausgebildeten Reifenwülsten, mittels der der schlauchlose Luftreifen auf der radialen Außenseite einer Felge montiert ist, und mit einem den Luftreifen nach radial innen zur Felge hin abdichtenden auf der radialen Außenseite der Felge angeordneten, in Umfangsrichtung über den Umfang der Felge erstreckten und in axialer Richtung zwischen den beiden Reifenwülsten des Luftreifens erstreckten Dichtring, wobei der Dichtring eine sich von der radial inneren Außenseite zur radial äußeren Außenseite des Dichtrings erstreckende Durchgangsöffnung aufweist. Weiter betrifft die Erfindung ein Fahrzeugrad aufweisend einen solchen Dichtring sowie ein Verfahren zur Herstellung eines solchen Dichtrings.

Aus der WO2005/082642 ist ein Dichtring für einen schlauchlosen Luftreifen mit zwei an dessen radial innerer Seite ausgebildeten Reifenwülsten, wobei der schlauchlose Luftreifen mittels seiner Reifenwülste auf der radialen Außenseite einer mehrteiligen Felge montiert ist, bekannt, bei dem der Luftreifen nach radial innen zur Felge hin mit einem in Umfangsrichtung über den Umfang der Felge erstreckten und in axialer Richtung zwischen den beiden Reifenwülsten des Luftreifens erstreckten Dichtring zur radialen Außenseite der Felge hin abgedichtet wird. Aufgrund des Überdrucks im Reifen im Betriebszustand presst der Dichtring die Reifenwülste und ist zwischen den Reifenwülsten dichtend verspannt.

Zum Befüllen und Entfüllen des Rades mit Luft weisen Felge und Dichtring eine Durchgangsöffnung auf, welche radial benachbart angeordnet sind und wobei üblicherweise durch die Durchgangsöffnung der Felge ein zumindest teilweise rohrförmiges Mittel zum Befüllen des Reifens mit Luft geführt ist. Im Bereich der Durchgangsöffnung der Felge besteht aufgrund der Wirkung des Reifeninnendruckes die Gefahr, dass der Dichtring zumindest teilweise durch die Durchgangsöffnung der Felge gedrückt wird. Dadurch kann der Dichtring beschädigt werden, was einen plötzlichen Innendruckverlust des Reifens zur Folge haben kann. Zur Abstützung des Dichtrings im Bereich der Durchgangsöffnung ist es daher bekannt, zusätzliche Abdeckteile aus Metall oder Kunststoff einzubringen. Das nachträgliche Einsetzen von Abdeckteilen ist insofern problematisch, als es häufig vergessen wird und/oder eine genaue Positionierung und Fixierung erforderlich ist.

Aus der WO2005/082642 ist es auch bekannt, das Mittel zum Befüllen mit Luft mit einer Sockelplatte zu versehen, welche zwischen Felge und Dichtplatte positioniert ist und somit ein Durchdrücken vermeiden soll. Auch hier muss das Mittel mit der Sockelplatte bei der Montage des Radsystems aufwändig angebracht und exakt positioniert werden, um eine zuverlässige Dichtheit zu gewährleisten.

Der Erfindung liegt die Aufgabe zugrunde, die Dichtheit des Fahrzeugrades zuverlässiger zu gewährleisten und eine einfachere Montage des Fahrzeugrades zu ermöglichen.

Die Aufgabe wird erfindungsgemäß dadurch gelöst, dass
- der Dichtring ein erstes Elastomermaterial, insbesondere eine erste Gummimischung, aufweist,
- dass in einem Bereich um die Durchgangsöffnung des Dichtrings eine Verstärkungsplatte aufweisend ein zweites Elastomermaterial, insbesondere eine zweite Gummimischung, angeordnet ist,
- dass das zweite Elastomermaterial eine Shore-A-Härte aufweist, die um mindestens 5 Shore-A, bevorzugt um 7 Shore-A bis 45 Shore-A, größer ist als die Shore-A-Härte des ersten Elastomermaterials, ermittelt jeweils im vulkanisierten Zustand bei Raumtemperatur gemäß DIN ISO 7619-1,
- dass die Verstärkungsplatte eine Durchgangsöffnung aufweist, welche die Durchgangsöffnung des Dichtrings zumindest teilweise beinhaltet,
- dass der Dichtring ein Durchlassmittel zum Befüllen des Reifens mit Luft aufweist, welches fest und luftdicht mit der Verstärkungsplatte verbunden ist
- dass das Durchlassmittel einen rohrförmigen Körper mit einem Luftkanal aufweist, wobei der rohrförmige Körper mit Luftkanal ganz oder teilweise in die Durchgangsöffnung der Verstärkungsplatte eingebracht ist
- und dass der Luftkanal die Durchlassöffnung des Dichtrings zumindest mitbildet.

Erfindungswesentlich ist, dass der Dichtring aufweisend die Verstärkungsplatte und das Durchlassmittel einstückig ausgeführt ist.

Im Bereich um die Durchgangsöffnung weist der erfindungsgemäße Dichtring eine Verstärkung durch die Verstärkungsplatte auf, wobei das zweite Elastomermaterial der Verstärkungsplatte eine größere Shore-A-Härte aufweist als das erste Elastomermaterial des Dichtrings. Die Verstärkungsplatte ist dabei ganz oder teilweise aus dem zweiten Elastomermaterial gebildet. Eine zu Undichtigkeit führende Beschädigung des Dichtrings durch Durchdrücken des Dichtrings durch die Durchgangsöffnung der Felge ist somit effektiv vermieden.

Im Dichtring liegen das erste Elastomermaterial, das zweite Elastomermaterial und das dritte Elastomermaterial in vulkanisiertem Zustand vor.

Die Verstärkungsplatte weist eine Durchgangsöffnung auf, welche die Durchgangsöffnung des Dichtrings ganz oder teilweise beinhaltet. Die Durchgangsöffnung des Dichtrings ist somit zumindest teilweise im räumlichen Bereich der Durchgangsöffnung der Verstärkungsplatte angeordnet.

Weiter weist der Dichtring ein Durchlassmittel zum Befüllen des Reifens mit Luft auf. Dieses ist fest und luftdicht mit der Verstärkungsplatte verbunden. Die Verbindung ist insbesondere stoffschlüssig ausgeführt. Bei der Verbindung kann es sich um eine Haft- und/oder Klebeverbindung handeln. Das Durchlassmittel kann auf eine dem Fachmann bekannte Art in die Verstärkungsplatte einvulkanisiert sein. Im Sinne der Erfindung ist etwas in den Dichtring oder in die Verstärkungsplatte einvulkanisiert, wenn es durch Vulkanisation mit dem Dichtring oder mit der Verstärkungsplatte verbunden ist.

Das Durchlassmittel aufweisend den rohrförmigen Körper und die Verstärkungsplatte sind luftdicht miteinander verbunden. Hierdurch erstreckt sich entlang der vom Luftkanal abgewandten Außenoberfläche des Durchlassmittels keine durchgängige luftdurchlässige Öffnung, welche die beiden radialen Außenseiten des Dichtungsrings verbindet. Der Dichtring weist somit genau eine durchgängige Öffnung von seiner radial äußeren Außenseite zu seiner radial inneren Außenseite auf, welche zumindest teilweise durch den Luftkanal gebildet ist.

Das Durchlassmittel weist einen rohrförmigen Körper mit einem Luftkanal auf. Der rohrförmige Körper ummantelt den Luftkanal. Der Luftkanal ist eine durchgängige Öffnung des rohrförmigen Körpers. Der Luftkanal bildet oder bildet mit eine durchgängige Öffnung des Durchlassmittels. Der rohrförmige Körper mit Luftkanal ist ganz oder teilweise in die Durchgangsöffnung der Verstärkungsplatte eingebracht. Der Luftkanal ist somit ganz oder teilweise im räumlichen Bereich der Durchgangsöffnung der Verstärkungsplatte angeordnet. Der Luftkanal bildet die Durchlassöffnung des Dichtrings oder er Luftkanal bildet die Durchlassöffnung des Dichtrings mit.

Somit ist mit der Durchgangsöffnung des Dichtrings eine durchgängige Öffnung von der radial inneren Außenseite des Dichtrings bis zur radial äußeren Außenseite des Dichtrings gegeben, welche zumindest teilweise durch den Luftkanal gebildet ist. Eventuell am Durchlassmittel beinhaltete oder angebrachte Mittel zum Verschließen des Durchlassmittels, wie ein Ventil, sind hierbei für die Durchgängigkeit nicht berücksichtigt und schränken diese nicht ein.

Der rohrförmige Körper des Durchlassmittels erstreckt sich beispielsweise vom Inneren der Durchgangsöffnung der Verstärkungsplatte bis zu einem in montiertem Zustand der Felge zugewandten Ende der Durchgangsöffnung der Verstärkungsplatte. Der rohrförmige Körper kann sich auch zumindest bis zum entsprechenden Ende der Durchgangsöffnung des Dichtrings, insbesondere in montiertem Zustand durch die Durchgangsöffnung der Felge hindurch erstrecken.

Das Durchlassmittel ist zum Befüllen des Reifens mit Luft geeignet. Beispielsweise weist es ein Mittel um einen Ventilschaft oder ein Ventil aufzunehmen auf oder es weist ein Ventil auf. Zum Befüllen mit Luft eventuell notwendige zusätzliche an das Durchlassmittel anzubringende Teile wie Ventilschaft oder Ventil können vor oder nach der Montage des Dichtrings auf der Felge auf einfache Art und Weise angebracht werden.

Die Verstärkungsplatte ist mit dem Dichtring fest verbunden. Die Verstärkungsplatte ist insbesondere auf eine der fachkundigen Person bekannte Art in den Dichtring einvulkanisiert. Die mit dem Dichtring fest verbundene Verstärkungsplatte und das mit der Verstärkungsplatte fest verbundene Durchlassmittel können sich, wie es bei mit dem Dichtring nicht fest verbundenen Platten und/oder Durchlassmitteln oft der Fall ist, im Betrieb nicht verschieben und es entfällt das aufwändige und fehleranfällige exakte Positionieren von zusätzlichen Teilen zwischen Felge und Dichtring bei der Montage des Dichtrings auf der Felge. Ein Durchdrücken des Dichtrings durch die Durchgangsöffnung der Felge ist vermieden. Somit ist die Dichtheit des Fahrzeugrades zuverlässiger gewährleistet und eine einfachere Montage des Fahrzeugrades ermöglicht.

Eine erste bevorzugte Ausführungsform ist dadurch gegeben, dass sich das erste Elastomermaterial auf mindestens 75%, bevorzugt mindestens 90%, des Umfangs des Dichtrings erstreckt und/oder dass sich die Verstärkungsplatte auf höchstens 20% des Umfangs des Dichtrings erstreckt. Über einen großen Teil des Umfangs des Dichtrings werden die Eigenschaften des Dichtrings durch das erste Elastomermaterial mitbestimmt. Die höhere Härte der Verstärkungsplatte ist bevorzugt auf den Bereich um die Durchgangsöffnung begrenzt.

Eine besonders vorteilhafte Verstärkung des Dichtrings im Bereich der Durchgangsöffnung ergibt sich, wenn die Verstärkungsplatte faserverstärkt ist. Das zweite Elastomermaterial enthält Fasern, insbesondere Fasern aus einem textilen Material, beispielsweise aus Nylon Rayon oder Polyester. Die Fasern in der Verstärkungsschicht können ferner unterschiedliche Längen von 2 mm bis 50 mm aufweisen. Es kann daher in der Verstärkungsschicht Fasermaterial verwendet werden, welches bei der Reifenfertigung vielfach eingesetzt wird, sodass die Fasern von geschreddertem, kalandriertem Gewebe, welches bei der Reifenfertigung anfällt, stammen können.

Um eine optimale Verstärkungswirkung zu erzielen, ist es von Vorteil, wenn die Verstärkungsplatte zu 10 Gew. % bis 80 Gew. %, vorzugsweise zu 60 Gew. %, bis 75 Gew.%, aus Fasern besteht.

Zweckmäßig ist es, wenn die Shore-A-Härte der Verstärkungsschicht bevorzugt 70 Shore-A bis 99 Shore-A beträgt.

Vorteilhaft ist es, wenn der Dichtring ein drittes Elastomermaterial, bevorzugt eine dritte Gummimischung, aufweist, wobei das dritte Elastomermaterial zumindest zwischen der Verstärkungsplatte und dem zweiten Elastomermaterial angeordnet ist. Bevorzugt ist das dritte Elastomermaterial in den Dichtring einvulkanisiert. Das dritte Elastomermaterial kann die Verstärkungsplatte nach radial außen und/oder in axialer Richtung und/oder in Umfangsrichtung ganz oder teilweise umgeben. Das dritte Elastomermaterial kann das gleiche Material wie das erste Elastomermaterial sein. Das erste Elastomermaterial kann sich dann über den gesamten Umfang des Dichtrings erstrecken. Das dritte Elastomermaterial kann auh verschieden zum ersten Elastomermaterial sein.

Das Durchlassmittel ist bevorzugt aus Metall oder aus Kunststoff gebildet. Zur besseren und haltbareren Verbindung zwischen Durchlassmittel und Verstärkungsplatte ist es vorteilhaft, wenn das Durchlassmittel einen Bereich aufweist, welcher sich quer zur Längserstreckungsrichtung des rohrförmigen Körpers erstreckt und die Verstärkungsplatte kontaktiert. Hierdurch ist die Fläche, insbesondere die Haftfläche, zur besseren Anbindung des Durchlassmittels an die Verstärkungsplatte, vergrößert. Es kann sich insbesondere um einen Sockel handeln.

Zum einfachen Befüllen des Rades mit Luft ist es vorteilhaft, wenn das Durchlassmittel ein Verbindungsmittel zum festen verbinden des Durchlassmittels mit einem Ventilschaft oder einem Ventil aufweist oder wenn das Durchlassmittel einen Ventilschaft und/oder, insbesondere am äußeren Ende des rohrförmigen Körpers, ein Ventil aufweist. Bei dem Verbindungsmittel kann es sich um ein Gewinde handeln.

Die Erstreckung der Verstärkungsplatte wird an den jeweiligen Dichtring angepasst. Vorteilhaft ist es, wenn die Verstärkungsplatte eine Höhe von mindestens 2 mm aufweist und wenn die Erstreckung in jeder Richtung senkrecht zur radialen Richtung mindestens 1,5 mal der maximalen Erstreckung des Durchlassmittels in dieser Richtung aufweist. Zweckmäßig ist es, wenn die maximale Erstreckung in Umfangsrichtung kleiner ist als die maximale Erstreckung in axialer Richtung.

Weiter betrifft die Erfindung ein Fahrzeugrad mit einem schlauchlosen Luftreifen mit zwei an dessen radial innerer Seite ausgebildeten Reifenwülsten, mittels der der schlauchlose Luftreifen auf der radialen Außenseite einer Felge montiert ist, und mit einem den Luftreifen nach radial innen zur Felge hin abdichtenden auf der radialen Außenseite der Felge angeordneten, in Umfangsrichtung über den Umfang der Felge erstreckten und in axialer Richtung zwischen den beiden Reifenwülsten des Luftreifens erstreckten Dichtring. Bei dem Luftreifen kann es sich um einen Industriereifen, einen Reifen für Gabelstapeler, Schwerlasttransporter oder Flugplatzfahrzeuge handeln.

Das erfindungsgemäße Verfahren zur Herstellung eines Dichtrings für ein Fahrzeugrad mit einem schlauchlosen Luftreifen, wobei der Dichtring eine Durchgangsöffnung aufweist, enthält folgende Schritte:
a) Bereitstellen eines ersten Bauteils aufweisend erstens eine Verstärkungsplatte aufweisend das zweite Elastomermaterial und eine Durchgangsöffnung sowie zweitens ein Durchlassmittel, wobei das Durchlassmittel zumindest aus einem rohrförmigen Körper mit einem Luftkanal gebildet ist, wobei der rohrförmige Körper mit Luftkanal zumindest teilweise in die Durchgangsöffnung der Verstärkungsplatte eingebracht ist, sowie drittens eine Durchgangsöffnung des ersten Bauteils, welche zumindest teilweise durch den Luftkanal gebildet ist,
b) Einbringen des ersten Bauteils und zumindest eines weiteren den Dichtring mitbildenden Bauteils in eine Vulkanisationsform, wobei das erste Bauteil so positioniert wird, dass die Durchgangsöffnung des Dichtrings zumindest teilweise durch die Durchgangsöffnung des ersten Bauteils gebildet wird, wobei ein erstes weiteres Bauteil das erste Elastomermaterial aufweist,
c) Schaffen einer festen und luftdichten Verbindung zwischen Durchlassmittel und Verstärkungsplatte,
d) Schaffen einer festen Verbindung zwischen den in die Vulkanisationsform eingebrachten Bauteilen des Dichtrings mittels Vulkanisation.

Das Verfahren zeichnet sich dadurch aus, dass in Schritt a) die Verstärkungsplatte mit dem Durchlassmittel verbunden wird und als ein Bauteil für die weiteren Schritte zur Verfügung gestellt wird. Die Verbindung kann formschlüssig und/oder durch eine Haftverbindung und/oder stoffschlüssig und/oder luftdicht ausgebildet sein. Hierdurch sind eine genaue Positionierung des Durchlassmittels relativ zur Verstärkungsplatte und relativ zum Dichtring sowie eine vereinfachte Prozessierbarkeit ermöglicht. Der rohrförmige Körper mit Luftkanal ist ganz oder teilweise in die Durchgangsöffnung der Verstärkungsplatte eingebracht und erstreckt sich bevorzugt zumindest bis zu einem in montiertem Zustand der Felge zugewandten Ende der Durchgangsöffnung der Verstärkungsplatte. Das erste Bauteil weist eine Durchgangsöffnung auf, welche durch den Luftkanal gebildet oder mitgebildet wird. Die Durchgangsöffnung der Verstärkungsplatte beinhaltet die Durchgangsöffnung des ersten Bauteils zumindest teilweise. Eventuell am Durchlassmittel beinhaltete oder angebrachte Mittel zum Verschließen des Durchlassmittels, wie ein Ventil, sind hierbei für die Durchgängigkeit nicht berücksichtigt und schränken diese nicht ein.

In Schritt b) werden Bauteile des Dichtrings in eine Vulkanisationsform eingebracht. Die Vulkanisationsform weist formgebende Mittel, insbesondere formgebende Mittel zur Schaffung einer Durchgangsöffnung oder Bereiche der Durchgangsöffnung im Dichtring auf. Die Positionierung des ersten Bauteils in der Vulkanisationsform erfolgt so, dass der fertige Dichtring eine durchgängige Öffnung aufweist, welche ganz oder teilweise durch die Durchgangsöffnung des ersten Bauteils und damit ganz oder teilweise durch den Luftkanal gebildet wird.

Ein erstes weiteres Bauteil weist das erste Elastomermaterial auf. Das zweite Elastomermaterial der Verstärkungsplatte weist eine Shore-A-Härte auf, die um mindestens 5 Shore-A, bevorzugt um 7 Shore-A bis 45 Shore-A, größer ist als die Shore-A-Härte des ersten Elastomermaterials, ermittelt jeweils im vulkanisierten Zustand bei Raumtemperatur gemäß DIN ISO 7619-1. Hierdurch ist eine ausreichende Verstärkung des Bereichs um die Durchgangsöffnung ermöglicht. Ein Verlust an Dichtigkeit durch Durchdrücken des Dichtrings durch die Durchgangsöffnung der Felge ist vermieden. Die weiteren Bauteile, insbesondere das erste weitere Bauteil, sind ganz oder teilweise in die Vulkanisationsform eingebracht.

In Schritt c) wird auf eine dem Fachmann bekannte Art eine feste und luftdichte Verbindung zwischen Durchlassmittel und Verstärkungsplatte geschaffen. Hierbei handelt es sich insbesondere um eine stoffschlüssige Verbindung. Es kann sich um eine Haft- oder Klebeverbindung handeln. Insbesondere wird das Durchlassmittel auf eine der fachkundigen Person bekannte Art in die Verstärkungsplatte einvulkanisiert. Hierzu wird in der Regel die mit der Verstärkungsplatte zu verbindende Oberfläche des Durchlassmittels zur besseren Haftung am einbettenden Elastomermaterial in einer der fachkundigen Person bekannten Art mit einer Imprägnierung und/oder einem Haftsystem vorbehandelt. Zweckmäßig ist es, wenn hierbei auch das zweite Elastomermaterial der Verstärkungsplatte teilvulkanisiert oder vulkanisiert wird. Teilvulkanisation bedeutet, dass nur ein örtlich begrenzter Teilbereich der gesamten Erstreckung des betrachteten elastomeren Materials vulkanisiert ist oder dass das elastomere Material nur teilvernetzt ist, also dass der Vernetzungsgrad im gesamten betrachteten elastomeren Material kleiner ist als der Vernetzungsgrad des elastomeren Materials im vulkanisierten Zustand.

Durchlassmittel und Verstärkungsplatte werden fest und luftdicht miteinander verbunden. Hierdurch erstreckt sich zwischen Durchlassmittel und Verstärkungsplatte keine durchgängige luftdurchlässige Öffnung, welche die beiden radialen Außenseiten der Verstärkungsplatte verbindet. Das erste Bauteil weist somit genau eine durchgängige Öffnung von seiner radial äußeren Außenseite zu seiner radial inneren Außenseite auf, welche zumindest teilweise durch den Luftkanal gebildet ist.

Oberflächen der in Schritt d) zu verbindenden Bauteile können zur besseren Haftung in einer der fachkundigen Person bekannten Art und Weise vorbehandelt sein. Möglich ist etwa eine mechanische Vorbehandlung und/ oder eine Imprägnierung und/oder eine Vorbehandlung mit einem Haftsystem.
In Schritt c) wird eine feste Verbindung der in die Form eingebrachten Bauteile des Dichtrings durch Vulkanisation geschaffen. Insbesondere wird das erste Bauteil fest mit einem oder mehreren weiteren Bauteilen des Dichtrings verbunden. Zweckmäßig ist es, wenn hierbei die Vulkanisation von in die Vulkanisationsform eingebrachtem elastomerem Material erfolgt, welches noch nicht vulkanisiert oder noch nicht teilvulkanisiert ist.

Nach Schritt c) und dem Vulkanisationsprozess in Schritt d), insbesondere dem Einvulkanisieren des ersten Bauteils in den Dichtring, ist eine feste Verbindung zwischen Durchlassmittel, Verstärkungsplatte und weiteren Bauteilen des Dichtrings sowie eine exakte Positionierung und Ausrichtung von Durchlassmittel und Verstärkungsplatte gegeben. Es ist somit eine durchgängige Öffnung von der radialen Außenseite des Dichtrings zur anderen radialen Außenseite des Dichtrings geschaffen, welche zumindest teilweise durch den Luftkanal gebildet ist.

Der Dichtring kann nach Schritt c) fertiggestellt sein oder es erfolgt ein Fertigstellen des Dichtrings mit weiteren Schritten.

Es ist also durch das Verfahren auf einfache Art und Weise ein Dichtring mit fest verbundenem Durchlassmittel zur Verfügung gestellt, der eine verbesserte Dichtigkeit des Fahrzeugrades zuverlässiger gewährleistet und eine einfachere Montage ermöglicht.

In einer ersten Ausführungsform ist es vorteilhaft, wenn in Schritt a) die Verstärkungsplatte mit zweitem Elastomermaterial in unvulkanisiertem Zustand bereitgestellt wird. Das erste Bauteil in Schritt b) ist somit aus der unvulkanisierten Verstärkungsplatte und dem damit verbundenen, Durchlassmittel gebildet. Die Vulkanisation der Verstärkungsplatte erfolgt in Schritt d). Bevorzugt erfolgt auch Schritt c), also das Schaffen einer festen und luftdichten Verbindung zwischen Durchlassmittel und Verstärkungsplatte, zumindest teilweise im Zuge des Vulkanisationsprozesses in Schritt d). Hierdurch kann der Dichtring mit wenigen Produktionsschritten zur Verfügung gestellt werden.

In einer anderen Ausführungsform ist es vorteilhaft, wenn der Schritt a) eine Teilvulkanisation oder eine Vulkanisation der Verstärkungsplatte mit einschließt. Diese Maßnahme erleichtert das Hantieren der Verstärkungsplatte und das Positionieren des rohrförmigen Körpers.

Vorteilhaft ist es auch, wenn der Schritt a) eine Teilvulkanisation oder eine Vulkanisation des ersten Bauteils aus Verstärkungsplatte und Durchlassmittel mit einschließt. Hierdurch erfolgt gegebenenfalls Schritt c) im Zuge von Schritt a), wodurch das Durchlassmittel bereits vor Einbringen des ersten Bauteils in die Vulkanisationsform fest und luftdicht mit der Verstärkungsplatte verbunden ist. Eine genaue Ausrichtung des Durchlassmittels relativ zur Verstärkungsplatte und die Hantierbarkeit des ersten Bauteils sind erleichtert.

In einer bevorzugten Ausführungsform wird in einem dem Schritt b) vorangehenden weiteren Schritt das erste weitere Bauteil teilvulkanisiert oder vulkanisiert. Der Vulkanisationsprozess oder der Teilvulkanisationsprozess kann formgebend erfolgen. Das erste weitere Bauteile kann extrudiert und, angepasst an den geforderten Durchmesser des Dichtrings, abgelängt sein. Das erste weitere Bauteil kann so effizient vorgefertigt werden und das Hantieren mit dem ersten weiteren Bauteil ist erleichtert. Um in Schritt d) die Schaffung einer festen Verbindung zwischen dem ersten weiteren Bauteil und anderen Bauteilen des Dichtrings zu ermöglichen, können die zu verbindenden Oberflächen des ersten weiteren Bauteils auf eine der fachkundigen Person bekannte Art vorbehandelt werden.

Vorteilhaft ist es auch, wenn in Schritt b) als ein zweites weiteres Bauteil ein drittes Elastomermaterial zwischen dem ersten Bauteil und dem ersten weiteren Bauteil eingebracht wird, wobei das dritte Elastomermaterial in unvulkanisiertem Zustand vorliegt. Das dritte Elastomermaterial wird in die Vulkanisationsform insbesondere eingespritzt oder eingefüllt. Das dritte Elastomermaterial umgibt die Verstärkungsplatte bevorzugt zumindest in axialer Richtung und/oder in Umfangsrichtung und/oder in zumindest einer radialen Richtung. Die Durchgangsöffnung kann zumindest teilweise von dem dritten Elastomermaterial begrenzt sein. Das dritte Elastomermaterial kann das gleiche Material wie das erste Elastomermaterial sein oder es kann verschieden zum ersten Elastomermaterial sein.

Zweckmäßig ist es, wenn sich das erste weitere Bauteil auf zumindest 75%, bevorzugt mindestens 90%, des Umfangs des Dichtrings erstreckt.

Zweckmäßig ist es, wenn das Durchlassmittel ein Verbindungsmittel zum festen Verbinden des Durchlassmittels mit einem Ventilschaft oder einem Ventil aufweist oder wenn das Durchlassmitel einen Ventilschaft oder ein Ventil aufweist. Bei dem Verbindungsmittel kann es sich um ein Gewinde handeln. Der Ventilschaft oder das Ventil kann im Anschluss an Schritt c), also nachdem das Durchlassmittel fest und luftdicht mit der Verstärkungsplatte verbunden ist, oder nach Schritt d) mit dem Durchlassmittel verbunden, insbesondere verschraubt, werden.

Die Erfindung wird im Folgenden anhand der in den Figuren 1 bis 4 dargestellten Ausführungsbeispiele eines Fahrzeugrades mit schlauchlosem Industriereifen mit in axialer Richtung geteilter Felge näher erläutert. Hierin zeigen:
- Fig. 1: einen die Fahrzeugradachse beinhaltenden Querschnitt durch ein Fahrzeugrad im Betriebszustand mit schlauchlosem Industriereifen und axial dreiteilig ausgebildeter Felge, mit Dichtring und mit eingebautem Ventilkörper mit Ventil,
- Fig. 2: Querschnittdarstellung eines Dichtrings vor Einbau ins Fahrzeugrad in einer Schnittebene, die die Achse des Dichtrings beinhaltet;
- Fig. 3: Querschnittdarstellung einer Verstärkungsplatte;
- Fig. 4: Aufsicht auf eine Vulkanisationsform aufweisend Bauteile des Dichtrings.

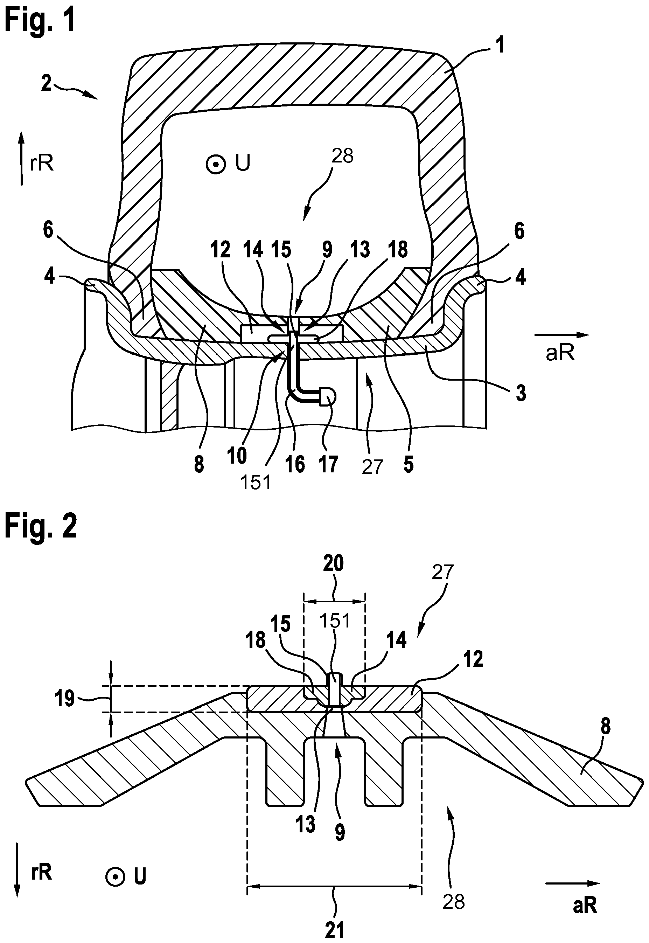

Fig. 1 zeigt die Querschnittsdarstellung eines Fahrzeugrades 2 mit Industriereifen - wie sie beispielsweise für Gabelstapler, Schwerlasttransporter oder Flugplatzfahrzeuge zum Einsatz kommen - mit einem schlauchlosen Luftreifen 1 bekannter Art, der sich in axialer Richtung ausgehend von einem ersten Reifenwulst 6 über eine in der Darstellung linke Seitenwand, einen Laufflächenbereich, eine in der Darstellung rechte Seitenwand bis zum zweiten Wulstbereich 6 erstreckt. Der Fahrzeugluftreifen ist mit seinen beiden Wülsten 6 auf einer Felge 3 bekannter Art befestigt. Die Felge kann ein- oder mehrstückig ausgebildet sein. Im montierten Zustand sitzt der Reifen 1 mit jedem Wulst 6 auf der als Sitzfläche ausgebildeten radial äußeren Oberfläche der Felge 3. Zur axialen Außenseite stützt sich jeder Wulst 6 am entsprechenden Felgenhorn 4 ab. Axial zwischen den beiden Wülsten 6 und in dichtendem axialen Berührkontakt zu den Wülsten 6 ist ein Dichtring 8 ausgebildet, der sich in Umfangsrichtung über den gesamten Umfang der Felge erstreckt. Der Dichtring 8 ist einstückig ausgebildet.

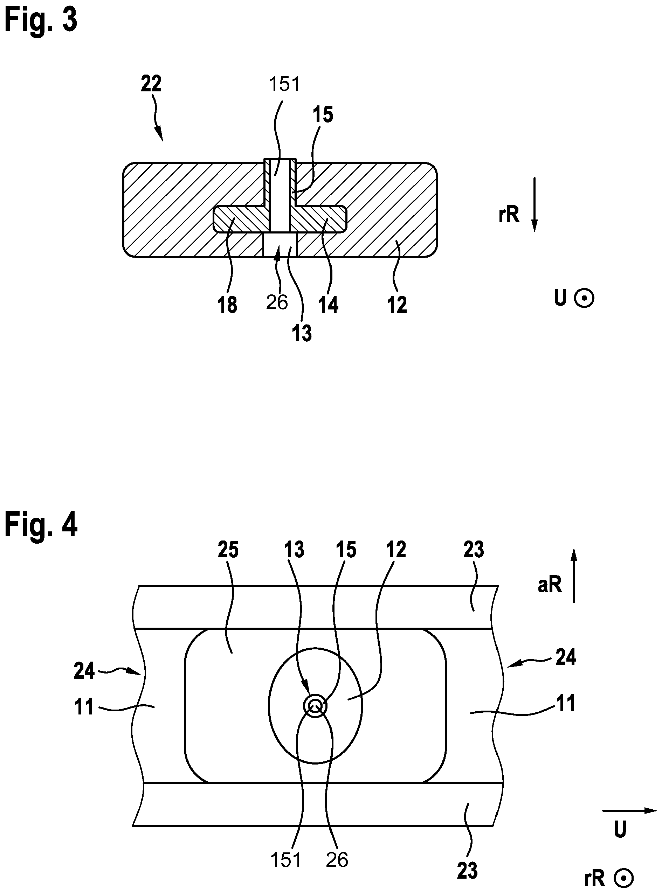

Der Dichtring 8 liegt im montierten in Fig. 1 dargestellten Betriebszustand nach radial innen auf der radial äußeren Oberfläche der Felge 3 auf. Im Dichtring 8 ist eine in radialer Richtung erstreckt ausgebildete weitgehend zylindrische Durchgangsöffnung 9 ausgebildet, die beispielsweise einen Durchmesser von 1 bis 10 mm aufweist. In der Felge 3 ist eine Durchgangsöffnung 10, die sich in radialer Richtung durch die Felge hindurch erstreckt ausgebildet. Wie in Fig. 4 gezeigt, weist der Dichtring 8 ein erstes Elastomermaterial 11, insbesondere eine erste Gummimischung, auf.

In einem Bereich um die Durchgangsöffnung 10 des Dichtrings ist in den Dichtring 8 eine Verstärkungsplatte 12 aufweisend ein zweites Elastomermaterial, insbesondere eine zweite Gummimischung, einvulkanisiert. Das zweite Elastomermaterial weist eine Shore-A-Härte auf, die um mindestens 5 Shore-A, bevorzugt um 7 Shore-A bis 45 Shore-A, größer ist als die Shore-A-Härte des ersten Elastomermaterials, ermittelt jeweils im vulkanisierten Zustand bei Raumtemperatur gemäß DIN ISO 7619-1.

Die Verstärkungsplatte 12 ist fest mit weiterem elastomerem Material 5 des Dichtrings 8 verbunden. Dabei kann es sich um erstes elastomeres Material oder um drittes elastomeres Material handeln. Die Verstärkungsplatte 12 ist insbesondere in das dritte elastomere Material 5 einvulkanisiert.

Auch die Verstärkungsplatte 12 weist eine Durchgangsöffnung 13 auf, welche die Durchgangsöffnung 9 des Dichtrings zumindest teilweise beinhaltet. Die Verstärkungsplatte 12 weist ein mit der Verstärkungsplatte fest und luftdicht verbundenes Durchlassmittel 14 zum Befüllen des Reifens mit Luft auf. Das Durchlassmittel 14 weist zumindest einen rohrförmigen Körper 15 mit einem Luftkanal 151 auf, welcher zumindest teilweise in die Durchgangsöffnung 13 der Verstärkungsplatte eingebracht ist und sich bevorzugt zumindest bis zu einem der Felge 3 zugewandten Ende der Durchgangsöffnung 13 der Verstärkungsplatte erstreckt. Der Luftkanal 151 und der rohrförmige Körper 15 erstrecken sich innerhalb der Durchgangsöffnung 13 der Verstärkungsplatte 12 entlang der Erstreckung der Durchgangsöffnung 13. Es ist somit eine durchgängige Öffnung von der radial äußeren Außenseite 28 zur radial inneren Außenseite 27 des Dichtrings 8 geschaffen, welche zumindest teilweise durch den Luftkanal 151 des rohrförmigen Körpers 15 gebildet ist. Eventuell am Duchlassmittel 14 beinhaltete oder angebrachte Mittel zum Verschließen des Durchlassmittels, wie ein Ventil 17, sind hierbei nicht berücksichtigt. Der Dichtring 8 mit Verstärkungsplatte 12 und Durchlassmittel 14 ist somit einstückig ausgeführt. Durchlassmittel 14 und Verstärkungsplatte 12 sind fest und luftdicht miteinander verbunden, wodurch sich zwischen Durchlassmittel 14 und Verstärkungsplatte 12 keine durchgängige Öffnung erstreckt, die die beiden radialen Außenseiten 27, 28 des Dichtungsrings 8 verbindet. Der Dichtring 8 weist somit genau eine durchgängige Öffnung von seiner radial äußeren Außenseite 28 zu seiner radial inneren Außenseite 27 auf, welche zumindest teilweise durch den Luftkanal 151 gebildet ist.

Das Durchlassmittel 14 weist auf oder ist im Betriebszustand des Rades verbunden mit einem Ventilschaft 16, welches sich bis zur radial inneren Außenseite des Dichtrings 8 und durch die Durchgangsöffnung 10 der Felge hindurch erstreckt. Der Ventilschaft ist außerhalb des Fahrzeugrades radial innerhalb der Felge in dem in Fig. 1 dargestellten Betriebszustand an seinem Ende mit einem Ventil 17 bekannter Art bestückt.

Zur Verankerung des Durchlassmittels 14 und zur Vergrößerung der Haftfläche zur Anbindung an die Verstärkungsplatte weist das Durchlassmittel 14 im Bereich der Verstärkungsplatte 12 einen Bereich 18 auf, welcher quer zur Längserstreckungsrichtung des rohrförmigen Körpers 15 verläuft. Der Bereich 18 ist kontaktierend zur Verstärkungsplatte 12 angeordnet. Es handelt sich um einen Sockel.

Die Fig. 2 zeigt einen Schnitt durch einen Dichtring 8 aufweisend eine Verstärkungsplatte 12 mit Durchlassmittel 14, welche geeignet ist für einen Dichtring 8 eines wie in Fig. 1 gezeigten Fahrzeugrades 2.
Das zweite Elastomermaterial der Verstärkungsplatte 12 ist mit Fasern, insbesondere Fasern aus einem textilen Material, beispielsweise aus Nylon Rayon oder Polyester, verstärkt. Es kann sich um Kurzfasern mit einer Länge von 3 mm bis 50 mm handeln. Das zweite Elastomermaterial besteht zu 10 Gew.% bis 80 Gew.%, vorzugsweise zu mindestens 60 Gew. %, aus Fasern.

Das Durchlassmittel weist einen Sockel mit einem Bereich 18 auf. Ein Oberflächenteil des Bereichs 18 ist radial innerhalb der Verstärkungsplatte 12 angeordnet, wodurch der Bereich 18 nicht vollständig von elastomerem Material umgeben ist. Ein Oberflächenteil des Bereichs 18 kann auch radial außerhalb der Verstärkungsplatte 12 angeordnet sein. Das Durchlassmittel weist als Verbindungsmittel zum Verbinden des Durchlassmittels mit einem Ventilschaft 16 oder einem Ventil 17 ein Gewinde auf. Die Verstärkungsplatte weist eine Höhe 19 von mindestens 2 mm auf. Die Erstreckung 21 in axialer Richtung aR senkrecht zur radialen Richtung rR beträgt mindestens 1,5 mal der maximalen Erstreckung 21 des Durchlassmittels 14 in dieser Richtung. Bevorzugt ist die maximale Erstreckung in Umfangsrichtung U kleiner als die maximale Erstreckung in axialer Richtung aR.

Die Fig. 3 zeigt einen Schnitt durch das erste Bauteil 22 wie in Schritt a) des Verfahrens bereitgestellt. Das erste Bauteil weist erstens eine Verstärkungsplatte 12 aufweisend das zweite Elastomermaterial und eine Durchgangsöffnung 13 sowie zweitens ein Durchlassmittel 14, wobei das Durchlassmittel zumindest aus einem rohrförmigen Körper 15 mit Luftkanal 151 gebildet ist, welcher zumindest teilweise in die Durchgangsöffnung 13 eingebracht ist, auf. Drittens weist das erste Bauteil 22 eine Durchgangsöffnung 26 auf, welche zumindest teilweise durch den Luftkanal 151 gebildet ist und welche zumindest teilweise in der Durchgangsöffnung 13 der Verstärkungsplatte beinhaltet ist.
Der Luftkanal 151 und der rohrförmige Körper 15 erstrecken sich innerhalb der Durchgangsöffnung 13 entlang der Erstreckung der Durchgangsöffnung 13 der Verstärkungsplatte 12. Der rohrförmige Körper 15 erstreckt sich zumindest bis zu einem der Felge zugewandten Ende der Durchgangsöffnung 13 der Verstärkungsplatte. Das Durchlassmittel 14 weist einen Bereich 18 auf, welcher auf beiden radialen Seiten von elastomerem Material umgeben ist. Im Verfahren zu Herstellung eines Dichtrings kann die Verstärkungsplatte 12 in unvulkanisiertem Zustand für Schritt b) bereitgestellt werden. Die Verstärkungsplatte kann aber auch teilvulkanisiert oder vulkanisiert werden, bevor sie bei Schritt b) in die Vulkanisationsform eingebracht wird. Um eine feste Verbindung zwischen der Verstärkungsplatte 12 und dem Durchlassmittel 14 zu erwirken, kann auch das gesamte erste Bauteil 22 teilvulkanisiert oder vulkanisiert bereitgestellt werden.

Die Fig. 4 zeigt eine Aufsicht auf einen Ausschnitt einer offenen Vulkanisationsform 23, in die, wie in Schritt b) des Verfahrens beschrieben, das erste Bauteil 22 und weitere den Dichtring 8 mitbildenden Bauteile 24,25 eingebracht sind. Die Vulkanisationsform 23 kann eine nicht dargestellte Segmentierung aufweisen. Das erste Bauteil 22 ist dabei so positioniert, dass die Durchgangsöffnung 9 des Dichtrings zumindest teilweise durch die Durchgangsöffnung 26 des ersten Bauteils 22 gebildet wird. In die Vulkanisationsform eingebracht ist auch ein erstes weiteres Bauteil 24 aufweisend das erste Elastomermaterial 11. Das erste weitere Bauteil 24 erstreckt sich in Umfangsrichtung von seinem hier links dargestellten einen Ende bis zu seinem hier rechts dargestellten anderen Ende, wodurch das erste weitere Bauteil 24, das erste Bauteil 22 und zweite weitere Bauteil 25 einen geschlossenen Ring ergeben. Vom ersten weiteren Bauteil 24 sind zumindest die beiden hier dargestellten Enden in die Vulkanisationsform 23 eingebracht. Das erste weitere Bauteil 24 kann unvulkanisiert, teilvulkanisiert oder vulkanisiert in die Form 23 eingebracht werden. Bevorzugt wird das erste weitere Bauteil 24 in einem vorgelagerten Schritt vulkanisiert und in vulkanisiertem Zustand in die Form 23 eingebracht.

Das erste Elastomermaterial 11 erstreckt sich auf mindestens 75%, bevorzugt mindestens 90%, des Umfangs des Dichtrings 8 und/oder die Verstärkungsplatte 12 erstreckt sich auf höchstens 20% des Umfangs des Dichtrings 8.

Weiter ist in die Heizform 23 ein zweites weiteres Bauteil 25 eingebracht. Dieses ist ein drittes Elastomermaterial, welches in den Bereich zwischen Verstärkungsplatte 12 und erstem weiteren Bauteil 24 eingebracht, bevorzugt eingespritzt, wird und die Verstärkungsplatte 12 zumindest in axialer Richtung aR und in Umfangsrichtung U umgibt. Das dritte Elastomermaterial ist bevorzugt gleich dem ersten Elastomermaterial.

In Schritt d) werden die in die Vulkanisationsform 23 eingebrachten Bauteile des Dichtrings 8 mittels Vulkanisation fest miteinander verbunden und gegebenenfalls ausvulkanisiert. Auch die feste und luftdichte Verbindung zwischen dem Durchlassmittel 14 und der Verstärkungsplatte 12 kann in diesem Schritt geschaffen werden.

### Bezugszeichenliste

- 1: Luftreifen
- 2: Fahrzeugrad
- 3: Felge
- 4: Felgenhorn
- 5: elastomeres Material
- 6: Reifenwulst
- 8: Dichtring
- 9: Durchgangsöffnung des Dichtrings
- 10: Durchgangsöffnung der Felge
- 11: Erstes Elastomermaterial
- 12: Verstärkungsplatte
- 13: Durchgangsöffnung der Verstärkungsplatte
- 14: Durchlassmittel
- 15: Rohrförmiger Körper
- 16: Ventilschaft
- 17: Ventil
- 18: Bereich
- 19: Höhe
- 20: Erstreckung
- 21: Erstreckung
- 22: Erstes Bauteil
- 23: Vulkanisationsform
- 24: Erstes weiteres Bauteil
- 25: Zweites weiteres Bauteil
- 26: Durchgangsöffnung des ersten Bauteils
- 27: radial innere Außenseite
- 28: radial äußere Außenseite
- 151: Luftkanal
- rR: radiale Richtung
- aR: axiale Richtung
- U: Umfangsrichtung

## Patentansprüche

1. Dichtring (8) für ein Fahrzeugrad (2) mit einem schlauchlosen Luftreifen (1) mit zwei an dessen radial innerer Seite ausgebildeten Reifenwülsten (6), mittels der der schlauchlose Luftreifen (1) auf der radialen Außenseite einer Felge (3) montiert ist, und mit einem den Luftreifen (1) nach radial innen zur Felge (3) hin abdichtenden auf der radialen Außenseite der Felge (3) angeordneten, in Umfangsrichtung (U) über den Umfang der Felge (3) erstreckten und in axialer Richtung (aR) zwischen den beiden Reifenwülsten (6) des Luftreifens (1) erstreckten Dichtring,
wobei der Dichtring (8) eine sich von der radial inneren Außenseite (27) zur radial äußeren Außenseite (28) des Dichtrings (8) erstreckende Durchgangsöffnung (9) aufweist, und wobei der Dichtring (8) ein erstes Elastomermaterial (11), insbesondere eine erste Gummimischung, aufweist,
**dadurch gekennzeichnet, dass**
- in einem Bereich (18) um die Durchgangsöffnung (9) des Dichtrings (8) eine Verstärkungsplatte (12) aufweisend ein zweites Elastomermaterial, insbesondere eine zweite Gummimischung, angeordnet ist,
- dass das zweite Elastomermaterial eine Shore-A-Härte aufweist, die um mindestens 5 Shore-A, bevorzugt um 7 Shore-A bis 45 Shore-A, größer ist als die Shore-A-Härte des ersten Elastomermaterials, ermittelt jeweils im vulkanisierten Zustand bei Raumtemperatur gemäß DIN ISO 7619-1,
- dass die Verstärkungsplatte (12) eine Durchgangsöffnung (13) aufweist, welche die Durchgangsöffnung (9) des Dichtrings (8) zumindest teilweise beinhaltet,
- dass der Dichtring (8) ein Durchlassmittel (14) zum Befüllen des Reifens mit Luft aufweist, welches fest und luftdicht mit der Verstärkungsplatte verbunden ist,
- dass das Durchlassmittel (14) einen rohrförmigen Körper (15) mit einem Luftkanal (151) aufweist, wobei der rohrförmige Körper (15) mit Luftkanal (151) ganz oder teilweise in die Durchgangsöffnung (13) der Verstärkungsplatte (12) eingebracht ist
- und dass der Luftkanal (151) die Durchlassöffnung (9) des Dichtrings (8) zumindest mitbildet.

2. Dichtring (8) nach Anspruch 1, **dadurch gekennzeichnet, dass** sich das erste Elastomermaterial (11) auf mindestens 75%, bevorzugt mindestens 90%, des Umfangs des Dichtrings (8) erstreckt und/oder dass sich die Verstärkungsplatte (12) auf höchstens 20% des Umfangs des Dichtrings (8) erstreckt.

3. Dichtring (8) nach einem oder mehreren der vorangehenden Ansprüche, **dadurch gekennzeichnet, dass** das zweite Elastomermaterial Fasern, insbesondere Fasern aus einem textilen Material, beispielsweise aus Nylon Rayon oder Polyester, enthält.

4. Dichtring (8) nach einem oder mehreren der vorangehenden Ansprüche, **dadurch gekennzeichnet, dass** die Fasern Kurzfasern mit einer Länge von 3 mm bis 50 mm sind.

5. Dichtring (8) nach einem oder mehreren der vorangehenden Ansprüche, **dadurch gekennzeichnet, dass** das zweite Elastomermaterial zu 10 Gew.% bis 80 Gew.%, vorzugsweise zu 60 Gew. % bis 75 Gew. %, aus Fasern besteht.

6. Dichtring (8) nach einem oder mehreren der vorangehenden Ansprüche, **dadurch gekennzeichnet, dass** der Dichtring (8) ein drittes Elastomermaterial, bevorzugt eine dritte Gummimischung, aufweist, welches zumindest zwischen der Verstärkungsplatte (12) und dem zweiten Elastomermatieral angeordnet ist.

7. Dichtring (8) nach einem oder mehreren der vorangehenden Ansprüche, **dadurch gekennzeichnet, dass** das Durchlassmittel (14) einen Bereich (18) aufweist, welcher sich quer zur Längserstreckungsrichtung des rohrförmigen Körpers (15) erstreckt und die Verstärkungsplatte (12) kontaktiert.

8. Dichtring (8) nach einem oder mehreren der vorangehenden Ansprüche, **dadurch gekennzeichnet, dass** das Durchlassmittel (14) ein Verbindungsmittel zum festen verbinden des Durchlassmittels (14) mit einem Ventilschaft (16) oder einem Ventil (17) aufweist oder einen Ventilschaft (16) und/oder ein Ventil (17) aufweist.

9. Dichtring (8) nach einem oder mehreren der vorangehenden Ansprüche, **dadurch gekennzeichnet, dass** die Verstärkungsplatte (12) eine Höhe (19) von mindestens 2 mm aufweist und dass die maximale Erstreckung (21) der Verstärkungsplatte (12) in jeder Richtung senkrecht zur radialen Richtung (rR) mindestens 1,5 mal die maximale Erstreckung (20) des Durchlassmittels (14) in dieser Richtung beträgt.

10. Fahrzeugrad (2) mit einem schlauchlosen Luftreifen (1) mit zwei an dessen radial innerer Seite ausgebildeten Reifenwülsten (6-), mittels der der schlauchlose Luftreifen (1) auf der radialen Außenseite einer Felge (3) montiert ist, und mit einem den Luftreifen (1) nach radial innen zur Felge (3) hin abdichtenden auf der radialen Außenseite der Felge (3) angeordneten, in Umfangsrichtung (U) über den Umfang der Felge (3) erstreckten und in axialer Richtung (aR) zwischen den beiden Reifenwülsten (6) des Luftreifens (1) erstreckten Dichtring (8) gemäß zumindest einem der vorangehenden Ansprüche.

11. Verfahren zur Herstellung eines Dichtrings (8) für ein Fahrzeugrad (2) mit einem schlauchlosen Luftreifen (1) gemäß zumindest einem der Ansprüche 1 bis 9, wobei der Dichtring (8) eine Durchgangsöffnung (9) aufweist, durch zumindest die folgenden Schritte:
a) Bereitstellen eines ersten Bauteils (22) aufweisend erstens eine Verstärkungsplatte (12) aufweisend das zweite Elastomermaterial und eine Durchgangsöffnung (13) sowie zweitens ein Durchlassmittel (14), wobei das Durchlassmittel (14) zumindest aus einem rohrförmigen Körper (15) mit einem Luftkanal (151) gebildet ist, welcher ganz oder teilweise in die Durchgangsöffnung (13) der Verstärkungsplatte (12) eingebracht ist, sowie drittens eine Durchgangsöffnung (26) des ersten Bauteils (22), welche zumindest teilweise durch den Luftkanal (151) gebildet ist,
b) Einbringen des ersten Bauteils (22) und zumindest eines weiteren den Dichtring (8) mitbildenden Bauteils (24,25) in eine Vulkanisationsform (23), wobei das erste Bauteil (22) so positioniert wird, dass die Durchgangsöffnung (9) des Dichtrings (8) zumindest teilweise durch die Durchgangsöffnung (13) der Verstärkungsplatte (12) gebildet wird, wobei ein erstes weiteres Bauteil (24) das erste Elastomermaterial (11) aufweist,
c) Schaffen einer festen Verbindung zwischen Durchlassmittel (14) und Verstärkungsplatte (12),
d) Schaffen einer festen Verbindung zwischen den in die Vulkanisationsform (23) eingebrachten Bauteilen (22,24,25) des Dichtrings (8) mittels Vulkanisation.

12. Verfahren gemäß Anspruch 11, **dadurch gekennzeichnet, dass** in Schritt a) die Verstärkungsplatte (12) mit zweitem Elastomermaterial in unvulkanisiertem Zustand bereitgestellt wird.

13. Verfahren gemäß Anspruch 11, **dadurch gekennzeichnet, dass** der Schritt a) eine Teilvulkanisation oder eine Vulkanisation der Verstärkungsplatte (12) mit einschließt.

14. Verfahren gemäß Anspruch 11 oder 13, **dadurch gekennzeichnet, dass** der Schritt a) das Heizen des ersten Bauteils (22) zur Teilvulkanisation oder Vulkanisation der Verstärkungsplatte (12) und zur Schaffung einer festen Verbindung zwischen Verstärkungsplatte (12) und Durchlassmittel (14) mit einschließt.

15. Verfahren gemäß zumindest einem der Ansprüche 11 bis 13, **dadurch gekennzeichnet, dass** in einem Schritt b) vorangehenden weiteren Schritt das erste weitere Bauteil (24) teilvulkanisiert oder vulkanisiert wird.

16. Verfahren gemäß zumindest einem der Ansprüche 11 bis 14, **dadurch gekennzeichnet, dass** in Schritt b) als ein zweites weiteres Bauteil (25) ein drittes Elastomermaterial zwischen dem ersten Bauteil (22) und dem ersten weiteren Bauteil (24) eingebracht wird, wobei das dritte Elastomermaterial in unvulkanisiertem Zustand vorliegt.

## Claims

1. Sealing ring (8) for a vehicle wheel (2) having a tubeless pneumatic tyre (1) with two tyre beads (6) which are configured on its radially inner side and by means of which the tubeless pneumatic tyre (1) is mounted on the radial outer side of a rim (3), and having a sealing ring which seals the pneumatic tyre (1) radially to the inside towards the rim (3), is arranged on the radial outer side of the rim (3), extends in the circumferential direction (U) over the circumference of the rim (3), and extends in the axial direction (aR) between the two tyre beads (6) of the pneumatic tyre (1),
the sealing ring (8) having a through opening (9) which extends from the radially inner outer side (27) to the radially outer outer side (28) of the sealing ring (8), and the sealing ring (8) comprising a first elastomer material (11), in particular a first rubber mixture,
**characterized in that**
- a reinforcing plate (12) comprising a second elastomer material, in particular a second rubber mixture, is arranged in a region (18) around the through opening (9) of the sealing ring (8),
- **in that** the second elastomer material has a Shore A hardness which is greater by at least 5 Shore A, preferably by from 7 Shore A to 45 Shore A, than the Shore A hardness of the first elastomer material, determined in each case in the vulcanized state at room temperature in accordance with DIN ISO 7619-1,
- **in that** the reinforcing plate (12) has a through opening (13) which at least partially contains the through opening (9) of the sealing ring (8),
- **in that** the sealing ring (8) comprises a passage means (14) for filling the tyre with air, which passage means (14) is connected to the reinforcing plate in a fixed and air-tight manner,
- **in that** the passage means (14) comprises a tubular body (15) with an air channel (151), the tubular body (15) having an air channel (151) being introduced completely or partially into the through opening (13) of the reinforcing plate (12),
- and **in that** the air channel (151) at least partially forms the through opening (9) of the sealing ring (8).

2. Sealing ring (8) according to Claim 1, **characterized in that** the first elastomer material (11) extends on at least 75%, preferably at least 90%, of the circumference of the sealing ring (8), and/or **in that** the reinforcing plate (12) extends on at most 20% of the circumference of the sealing ring (8).

3. Sealing ring (8) according to one or more of the preceding claims, **characterized in that** the second elastomer material contains fibres, in particular fibres made from a textile material, for example made from nylon, rayon or polyester.

4. Sealing ring (8) according to one or more of the preceding claims, **characterized in that** the fibres are staple fibres having a length of from 3 mm to 50 mm.

5. Sealing ring (8) according to one or more of the preceding claims, **characterized in that** from 10% by weight to 80% by weight, preferably from 60% by weight to 75% by weight, of the second elastomer material consists of fibres.

6. Sealing ring (8) according to one or more of the preceding claims, **characterized in that** the sealing ring (8) comprises a third elastomer material, preferably a third rubber mixture, which is arranged at least between the reinforcing plate (12) and the second elastomer material.

7. Sealing ring (8) according to one or more of the preceding claims, **characterized in that** the passage means (14) comprises a region (18) which extends transversely with respect to the longitudinal extent direction of the tubular body (15) and makes contact with the reinforcing plate (12).

8. Sealing ring (8) according to one or more of the preceding claims, **characterized in that** the passage means (14) comprises a connecting means for connecting the passage means (14) fixedly to a valve stem (16) or comprises a valve (17), or comprises a valve stem (16) and/or a valve (17).

9. Sealing ring (8) according to one or more of the preceding claims, **characterized in that** the reinforcing plate (12) has a height (19) of at least 2 mm, and **in that** the maximum extent (21) of the reinforcing plate (12) in every direction perpendicularly with respect to the radial direction (rR) is at least 1.5 times the maximum extent (20) of the passage means (14) in the said direction.

10. Vehicle wheel (2) having a tubeless pneumatic tyre (1) with two tyre beads (6-) which are configured on its radially inner side and by means of which the tubeless pneumatic tyre (1) is mounted on the radial outer side of a rim (3), and having a sealing ring (8) according to at least one of the preceding claims which seals the pneumatic tyre (1) radially to the inside towards the rim (3), is arranged on the radial outer side of the rim (3), extends in the circumferential direction (U) over the circumference of the rim (3), and extends in the axial direction (aR) between the two tyre beads (6) of the pneumatic tyre (1).

11. Method for producing a sealing ring (8) for a vehicle wheel (2) having a tubeless pneumatic tyre (1) according to at least one of Claims 1 to 9, the sealing ring (8) having a through opening (9), by way of at least the following steps:
a) providing of a first component (22) comprising firstly a reinforcing plate (12) comprising the second elastomer material and a through opening (13), and secondly a passage means (14), the passage means (14) being formed at least from a tubular body (15) with an air channel (151) which is introduced completely or partially into the through opening (13) of the reinforcing plate (12), and thirdly a through opening (26) of the first component (22), which through opening (26) is formed at least partially by way of the air channel (151),
b) introducing of the first component (22) and at least one further component (24, 25) which partially forms the sealing ring (8) into a vulcanization mould (23), the first component (22) being positioned in such a way that the through opening (9) of the sealing ring (8) is formed at least partially by way of the through opening (13) of the reinforcing plate (12), a first further component (24) comprising the first elastomer material (11),
c) producing of a fixed connection between the passage means (14) and the reinforcing plate (12),
d) producing of a fixed connection between the components (22, 24, 25) of the sealing ring (8) which are introduced into the vulcanization mould (23) by means of vulcanization.

12. Method according to Claim 11, **characterized in that**, in step a), the reinforcing plate (12) comprising a second elastomer material is provided in the non-vulcanized state.

13. Method according to Claim 11, **characterized in that** step a) also includes partial vulcanization or vulcanization of the reinforcing plate (12).

14. Method according to Claim 11 or 13, **characterized in that** step a) also includes heating of the first component (22) for partial vulcanization or vulcanization of the reinforcing plate (12) and for producing a fixed connection between the reinforcing plate (12) and the passage means (14).

15. Method according to at least one of Claims 11 to 13, **characterized in that**, in a further step which precedes step b), the first further component (24) is partially vulcanized or is vulcanized.

16. Method according to at least one of Claims 11 to 14, **characterized in that**, in step b), a third elastomer material is introduced as a second further component (25) between the first component (22) and the first further component (24), the third elastomer material being present in the non-vulcanized state.

## Revendications

1. Bague d'étanchéité (8) pour une roue de véhicule (2) comprenant un pneumatique (1) sans chambre à air doté de deux bourrelets de pneumatique (6) formés sur son côté radialement intérieur, bourrelets de pneumatique au moyen desquels le pneumatique (1) sans chambre air est monté sur le côté extérieur radial d'une jante (3), et une bague d'étanchéité qui assure l'étanchéité du pneumatique (1) radialement vers l'intérieur en direction de la jante (3), est disposée sur le côté extérieur radial de la jante (3), s'étend dans la direction périphérique (U) sur la périphérie de la jante (3) et s'étend dans la direction axiale (aR) entre les deux bourrelets (6) du pneumatique (1),
la bague d'étanchéité (8) comprenant une ouverture traversante (9) s'étendant du côté extérieur (27) radialement intérieur au côté extérieur (28) radialement extérieur de la bague d'étanchéité (8), et la bague d'étanchéité (8) comprenant une première matière élastomère (11), en particulier un premier mélange de caoutchouc,
**caractérisée en ce que**
- dans une région (18) autour de l'ouverture traversante (9) de la bague d'étanchéité (8) est disposée une plaque de renforcement (12) comprenant une deuxième matière élastomère, en particulier un deuxième mélange de caoutchouc,
- **en ce que** la deuxième matière élastomère présente une dureté Shore A qui est supérieure d'au moins 5 Shore A, de préférence de 7 Shore A à 45 Shore A, à la dureté Shore A de la première matière élastomère, déterminée respectivement à l'état vulcanisé à température ambiante selon DIN ISO 7619-1,
- **en ce que** la plaque de renforcement (12) comprend une ouverture traversante (13), laquelle comporte au moins partiellement l'ouverture traversante (9) de la bague d'étanchéité (8),
- **en ce que** la bague d'étanchéité (8) comprend un moyen de passage (14) servant à remplir le pneumatique d'air, lequel moyen est relié à la plaque de renforcement solidement et de manière étanche à l'air,
- **en ce que** le moyen de passage (14) comprend un corps tubulaire (15) doté d'un conduit d'air (151), le corps tubulaire (15) doté du conduit d'air (151) étant inséré entièrement ou partiellement dans l'ouverture traversante (13) de la plaque de renforcement (12),
- et **en ce que** le conduit d'air (151) forme au moins conjointement l'ouverture de passage (9) de la bague d'étanchéité (8).

2. Bague d'étanchéité (8) selon la revendication 1, **caractérisée en ce que** la première matière élastomère (11) s'étend sur au moins 75 %, de préférence sur au moins 90 %, de la périphérie de la bague d'étanchéité (8) et/ou **en ce que** la plaque de renforcement (12) s'étend sur au maximum 20 % de la périphérie de la bague d'étanchéité (8).

3. Bague d'étanchéité (8) selon l'une ou plusieurs des revendications précédentes, **caractérisée en ce que** la deuxième matière élastomère contient des fibres, en particulier des fibres en une matière textile, par exemple en nylon, en rayonne ou en polyester.

4. Bague d'étanchéité (8) selon l'une ou plusieurs des revendications précédentes, **caractérisée en ce que** les fibres sont des fibres courtes présentant une longueur de 3 mm à 50 mm.

5. Bague d'étanchéité (8) selon l'une ou plusieurs des revendications précédentes, **caractérisée en ce que** la deuxième matière élastomère est constituée de fibres à raison de 10 % en poids à 80 % en poids, de préférence à raison de 60 % en poids à 75 % en poids.

6. Bague d'étanchéité (8) selon l'une ou plusieurs des revendications précédentes, **caractérisée en ce que** la bague d'étanchéité (8) comprend une troisième matière élastomère, de préférence un troisième mélange de caoutchouc, laquelle matière élastomère est disposée au moins entre la plaque de renforcement (12) et la deuxième matière élastomère.

7. Bague d'étanchéité (8) selon l'une ou plusieurs des revendications précédentes, **caractérisée en ce que** le moyen de passage (14) comprend une région (18), laquelle s'étend transversalement à la direction d'étendue longitudinale du corps tubulaire (15) et est en contact avec la plaque de renforcement (12).

8. Bague d'étanchéité (8) selon l'une ou plusieurs des revendications précédentes, **caractérisée en ce que** le moyen de passage (14) comprend un moyen de liaison pour relier solidement le moyen de passage (14) à une tige de soupape (16) ou à une soupape (17) ou comprend une tige de soupape (16) et/ou une soupape (17).

9. Bague d'étanchéité (8) selon l'une ou plusieurs des revendications précédentes, **caractérisée en ce que** la plaque de renforcement (12) présente une hauteur (19) d'au moins 2 mm, et **en ce que** l'étendue maximale (21) de la plaque de renforcement (12) dans chaque direction perpendiculaire à la direction radiale (rR) correspond à au moins 1,5 fois l'étendue maximale (20) du moyen de passage (14) dans cette direction.

10. Roue de véhicule (2) comprenant un pneumatique (1) sans chambre à air doté de deux bourrelets de pneumatique (6) formés sur son côté radialement intérieur, bourrelets de pneumatique au moyen desquels le pneumatique (1) sans chambre à air est monté sur le côté extérieur radial d'une jante (3), et une bague d'étanchéité (8) qui assure l'étanchéité du pneumatique (1) radialement vers l'intérieur en direction de la jante (3), est disposée sur le côté extérieur radial de la jante (3), s'étend dans la direction périphérique (U) sur la périphérie de la jante (3) et s'étend dans la direction axiale (aR) entre les deux bourrelets (6) du pneumatique (1) selon au moins l'une des revendications précédentes.

11. Procédé de fabrication d'une bague d'étanchéité (8) pour une roue de véhicule (2) comprenant un pneumatique (1) sans chambre à air selon au moins l'une des revendications 1 à 9, dans lequel la bague d'étanchéité (8) comprend une ouverture traversante (9), selon au moins les étapes suivantes consistant à :
a) fournir un premier composant (22) comprenant, premièrement, une plaque de renforcement (12) comprenant la deuxième matière élastomère et une ouverture traversante (13) et, deuxièmement, un moyen de passage (14), le moyen de passage (14) étant formé au moins à partir d'un corps tubulaire (15) doté d'un conduit d'air (151), lequel corps tubulaire est inséré entièrement ou partiellement dans l'ouverture traversante (13) de la plaque de renforcement (12), ainsi que, troisièmement, une ouverture traversante (26) du premier composant (22) laquelle est formée au moins partiellement par le conduit d'air (151),
b) insérer le premier composant (22) et au moins un autre composant (24, 25) formant conjointement la bague d'étanchéité (8) dans un moule de vulcanisation (23), le premier composant (22) étant positionné de telle sorte que l'ouverture traversante (9) de la bague d'étanchéité (8) soit formée au moins partiellement par l'ouverture traversante (13) de la plaque de renforcement (12), un premier autre composant (24) comprenant la première matière élastomère (11),
c) réaliser une liaison solide entre le moyen de passage (14) et la plaque de renforcement (12),
d) réaliser, par vulcanisation, une liaison solide entre les composants (22, 24, 25) de la bague d'étanchéité (8) insérés dans le moule de vulcanisation (23) .

12. Procédé selon la revendication 11, **caractérisé en ce qu'**à l'étape a), la plaque de renforcement (12) dotée de la deuxième matière élastomère est fournie à l'état non vulcanisé.

13. Procédé selon la revendication 11, **caractérisé en ce que** l'étape a) comporte une vulcanisation partielle ou une vulcanisation de la plaque de renforcement (12).

14. Procédé selon la revendication 11 ou 13, **caractérisé en ce que** l'étape a) comporte le chauffage du premier composant (22) pour la vulcanisation partielle ou la vulcanisation de la plaque de renforcement (12) et pour la réalisation d'une liaison solide entre la plaque de renforcement (12) et le moyen de passage (14).

15. Procédé selon au moins l'une des revendications 11 à 13, **caractérisé en ce que**, dans une autre étape précédant l'étape b), le premier autre composant (24) est partiellement vulcanisé ou vulcanisé.

16. Procédé selon au moins l'une des revendications 11 à 14, **caractérisé en ce qu'**à l'étape b), en tant que deuxième autre composant (25), une troisième matière élastomère est insérée entre le premier composant (22) et le premier autre composant (24), la troisième matière élastomère étant présente à l'état non vulcanisé.
